(19) Europäisches Patentamt
European Patent Office
Office européen des brevets

(11) **EP 4 575 877 A1**

(12) **EUROPÄISCHE PATENTANMELDUNG**

(43) Veröffentlichungstag:
**25.06.2025  Patentblatt 2025/26**

(21) Anmeldenummer: **24220079.8**

(22) Anmeldetag: **16.12.2024**

(51) Internationale Patentklassifikation (IPC):
**G06F 30/20** (2020.01)   **G05B 17/02** (2006.01)
**G06F 111/10** (2020.01)   **G06F 119/02** (2020.01)
**G06F 119/14** (2020.01)

(52) Gemeinsame Patentklassifikation (CPC):
**G06F 30/20; G05B 17/02;** G06F 30/15; G06F 30/28;
G06F 2111/10; G06F 2119/02; G06F 2119/14

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **21.12.2023  DE 102023136378
15.04.2024  DE 102024110432**

(71) Anmelder: **Deutsches Zentrum für Luft- und
Raumfahrt e.V.
53227 Bonn (DE)**

(72) Erfinder:
• **Quero Martin, David
37073 Göttingen (DE)**
• **Nitzsche, Jens
37073 Göttingen (DE)**

(74) Vertreter: **REHBERG HÜPPE + PARTNER
Patentanwälte PartG mbB
Robert-Gernhardt-Platz 1
37073 Göttingen (DE)**

(54) **VERFAHREN UND FLUGZEUG MIT EINER VORRICHTUNG ZUR VORHERSAGE VON FLATTER- UND BUFFETONSET**

(57)     Zum Festlegen einer Flugenveloppe (24) werden strukturelle Eigenschaften eines Flugzeugs in einem Strukturmodell (13) beschrieben. Aus dem Strukturmodell (13) wird eine Struktureigenmode unter der Annahme bestimmt, dass keine aerodynamischen Kräfte ($F_a$) wirken. In einem aerodynamischen Modell (14) werden aerodynamische Eigenschaften des Flugzeugs in der Strömung (3) unter den anfänglichen Annahmen beschrieben, dass das Flugzeug Bewegungen (15) gemäß der Struktureigenmode vollführt und die Strömung (3) keinen Einfluss auf diese Bewegungen (15) hat. Damit werden eine dominante Strömungseigenmode der Strömung (3) und aerodynamische Kräfte auf das Flugzeug bestimmt. Das aerodynamische Modell wird durch Kopplung des Strukturmodells (13) in ein aeroelastisches Modell (12) überführt. Anschließend wird der dynamische Druck ($q_{dyn}$) sukzessive erhöht, wobei die Struktureigenmode und die dominante Strömungseigenmode hinsichtlich ihrer Eigenwerte (16, 18, 20) verfolgt werden. Ein Flatteronset wird erkannt, wenn ein Realteil eines Eigenwerts der Struktureigenmode positiv wird, und ein Buffetonset wird erkannt, wenn ein Realteil eines Eigenwerts der dominanten Strömungseigenmode positiv wird. Eine Grenze (27) der Flugenveloppe (24) des Flugzeugs zu höheren Machzahlen hin wird so festgelegt, dass die Flugenveloppe (24) einen Abstand zu dem Flatteronset und dem Buffetonset einhält.

**Fig. 10**

EP 4 575 877 A1

**Beschreibung**

## TECHNISCHES GEBIET DER ERFINDUNG

Die Erfindung bezieht sich auf ein Verfahren zum Festlegen einer Flugenveloppe eines Flugzeugs unter Vorhersage von Flatter- und Buffetonset bei dem Flugzeug, das sich in einer Strömung bewegt. Weiterhin bezieht sich die Erfindung auf ein Flugzeug mit einer Vorrichtung zur Durchführung des Verfahrens.

Flattern ist eine dynamische Instabilität eines Körpers, der sich in einer Strömung bewegt. Das Flattern basiert auf einer Struktureigenmode des Körpers. Buffet ist eine aerodynamische Verzweigung einer Strömung, die einen Körper umströmt. Als Buffet kann der Zustand bezeichnet werden, bei dem das linearisierte Verhalten der Strömung auf der Seite der Verzweigung, auf der ein stationärer Zustand stabil ist, instabil wird. Das Buffet basiert auf einer Strömungseigenmode der Strömung. In dieser Beschreibung und den anhängenden Patentansprüchen bezeichnet der Begriff Buffet den Zustand, bei dem diese Strömungseigenmode instabil wird, unabhängig davon, ob die Strömungseigenmode von Bewegungen des Körpers beeinflusst ist oder nicht. Flattern und Buffet sind begrenzende Faktoren für den Einsatzbereich eines Flugzeugs im transsonischen Bereich hin zu hohen Machzahlen. Im transsonischen Bereich treten ein Übergang der Strömung von einem laminaren in einen turbulenten Zustand und stoßinduzierte Strömungsablösungen auf. Mit letzteren gehen zunächst gedämpfte Strömungseigenmoden niedriger Frequenz einher, die in das sogenannte transsonische Buffet übergehen können.

Die strömungsphysikalischen Rückkopplungsmechanismen, die dem Flattern und dem Buffet zugrunde liegen, sind weitgehend ungeklärt. Bis heute existiert keine zufriedenstellende Theorie zur Vorhersage von Frequenz und Dämpfung dieser Eigenmoden auf Basis eines stationären Hintergrundströmungsfelds.

Gemäß Flugenveloppe - Wikipedia, https://de.wikipedia.org/wiki/Flugenveloppe, zuletzt bearbeitet am 3. Dezember 2022 um 22:14 Uhr, ist die Flugenveloppe (engl. flight envelope) oder Flugbereichsgrenze die Hüllkurve der möglichen Leistung eines Flugkörpers in einem Höhen-Geschwindigkeitsdiagramm oder Lastvielfachem-Geschwindigkeitsdiagramm. Flugenveloppen kennzeichnen den zulässigen Betriebsbereich eines Flugkörpers. Er wird von einer Matrix sich gegenseitig beeinflussender Parameter bestimmt, die ihrerseits nur bestimmte Werte annehmen dürfen. Befindet sich das Flugzeug außerhalb der Flugenveloppe, nehmen Flugparameter inakzeptable Werte an, was zur Beschädigung oder sogar zum Absturz des Flugzeugs führen kann. Das Kriterium für die Festlegung der Flugenveloppe ist einzig die Sicherheit des Flugzeugs, nicht dessen effizienter Betrieb. Sie wird üblicherweise durch umfangreiche Tests von Hard- und Software am Boden (z. B. im Windkanal) und in der Luft bestimmt.

## STAND DER TECHNIK

Aus Houtman, J. and Timme, S., Global stability analysis of elastic aircraft in edge-of-theenvelope flow, Journal of Fluid Mechanics, Col. 967, A4, 2023, https://doi.org/1 0.101 7/jfm.2023.413, ist es bekannt, das Auftreten von Flattern und Buffet als vollständiges Eigenwertproblem zu lösen. Dies erfordert die Berechnung der Eigenwerte einer sehr großen Matrix. Iterative Verfahren sind erforderlich, da nicht alle Eigenwerte auf einmal berechnet werden können. Zudem muss der Anwender einen Anfangseigenwert vorgeben, der nachher an der gesuchten Lösung liegt.

Aus J. Nitzsche, L. Ringer, C. Kaiser und H. Hennings, "Fuild-mode flutter in plane transonic flows," International Forum on Aeroelasticity and Structural Dynamics (IFASD), 2019, ist es zur Beschreibung eines linearisierten Flatter-Stabilitätsproblems im Vorbuffetbereich bekannt, die Rückkopplung generalisierter aerodynamischer Kräfte (Generalized Aerodynamic Forces = GAF) auf ein Strukturmodell mit Hilfe eines aerodynamischen Modells reduzierter Ordnung im Zeitbereich anzunähern. Die generalisierten aerodynamischen Kräfte werden zuvor aus einem aerodynamischen Modell ermittelt. Dieses Vorgehen erfordert Berechnungen im Zeitbereich und eine Analyse der Konvergenz der erhaltenen Lösungen in Bezug auf die Anregungsamplitude.

D. Quero, P. Vuillemin und C. Poussot-Vassal, "A generalized eigenvalue solution to the flutter stability problem with true damping: The p-L method," Journal of Fluids and Structures, 103266. doi: 10.1016/j.jfluidstructs.2021.103266, 2021, beschreiben eine generalisierte Eigenwertlösung für das Flatterstabilitätsproblem, bei dem die Dämpfung berücksichtigt wird. Bei diesem p-L Methode genannten Verfahren wird das nichtlineare Eigenwertproblem durch Interpolieren des nichtlinearen aerodynamischen Terms mit Hilfe von Loewner- und verschobenen Loewner-Matrizen unter Vermeidung jeglicher Näherung in eine linear generalisierte Eigenwertformulierung überführt. Ein solches Verfahren ist auch aus D. Quero, P. Vuillemin und C. Poussot-Vassal, "Improved mode tracking for the p-L flutter solution method based on aeroelastic derivatives," in IFASD, Madrid, Spanien, 2022, bekannt.

## AUFGABE DER ERFINDUNG

Der Erfindung liegt die Aufgabe zugrunde, ein Verfahren zum Festlegen einer Flugenveloppe eines Flugzeugs unter Vorhersage von Flatter- und Buffetonset bei dem Flugzeug, das sich in einer Strömung, aufzuzeigen, bei dem alle für den Flatteronset und den Buffetonset relevanten aeroelastischen Eigenwerte und Eigenvektoren auf einmal bestimmt werden, wodurch die Notwendigkeit einer Schätzung für die gesuchte Lösung des Buffetonsets entfällt.

## LÖSUNG

Die Aufgabe der Erfindung wird durch ein Verfahren mit den Merkmalen des unabhängigen Patentanspruchs 1 gelöst. Die abhängigen Patentansprüchen 2 bis 16 betreffen bevorzugte Ausführungsformen des erfindungsgemäßen Verfahrens. Die Patentansprüche 16 bis 19 sind auf ein Flugzeug mit einer Vorrichtung zur automatischen Durchführung eines solchen Verfahrens gerichtet.

## BESCHREIBUNG DER ERFINDUNG

Bei einem erfindungsgemäßen Verfahren zum Festlegen einer Flugenveloppe eines Flugzeugs unter Vorhersage von Flatter- und Buffetonset bei dem Flugzeug, das sich in einer Strömung bewegt, werden strukturelle Eigenschaften des Flugzeugs in einem Strukturmodel beschrieben, das eine vorzugsweise verallgemeinerte Massenmatrix, eine vorzugsweise verallgemeinerte Steifigkeitsmatrix und eine vorzugsweise verallgemeinerte Dämpfungsmatrix umfasst. Das Flugzeug ist ein sich bei seinen Bewegungen in der Strömung verformender Körper, insbesondere ein sich elastisch verformender Körper. Weiterhin kann ein relevanter Teil des Flugzeugs als ein bei seinen Bewegungen in der Strömung abgestützter, insbesondere elastisch abgestützter, Körper betrachtet werden. Je nach den strukturellen Eigenschaften des Flugzeugs bzw. seines relevanten Teils können Einträge auf den Hauptdiagonalen der Steifigkeitsmatrix und/oder der Dämpfungsmatrix null sein. Aus dem Strukturmodell wird mindestens eine Struktureigenmode des Flugzeugs unter der Annahme bestimmt, dass keine aerodynamischen Kräfte auf das Flugzeug einwirken. Es können auch mehrere oder sogar alle Struktureigenmoden des Flugzeugs unter dieser Annahme bestimmt und im Folgenden berücksichtigt werden.

Aerodynamische Eigenschaften des Flugzeugs in der Strömung werden in einem aerodynamischen Modell beschrieben. Dies erfolgt unter den anfänglichen Annahmen, dass das Flugzeug Bewegungen gemäß der mindestens einen Struktureigenmode vollführt und dass die Strömung keinen Einfluss auf die Bewegungen des Flugzeugs hat. Mindestens eine dominante Strömungseigenmode der Strömung und aerodynamische Kräfte auf das Flugzeug werden aus dem aerodynamischen Model unter der anfänglichen Annahme bestimmt. Als die mindestens eine dominante Strömungseigenmode ist diejenige Strömungseigenmode der Strömung zu bestimmen, die für den Buffetonset verantwortlich ist. Hierbei handelt es sich typischerweise um die im transsonischen Bereich der Strömung dominanteste Strömungseigenmode. Indem die aerodynamischen Eigenschaften des Flugzeugs unter der Annahme beschrieben werden, dass sich das Flugzeug gemäß der mindestens einen Struktureigenmode in der Strömung bewegt, dass sich die Strömung aber nicht auf diese Bewegungen des Flugzeugs auswirkt, werden bei dem aerodynamischen Modell zwar Auswirkungen der mindestens einen Struktureigenmode auf die Strömung berücksichtigt, aber keine Rückkopplungen der aerodynamischen Kräfte auf die Bewegungen des Flugzeugs.

Durch Kopplung mit dem Strukturmodell wird das aerodynamische Modell in ein aeroelastisches Modell überführt, das auch Auswirkungen der aerodynamischen Kräfte auf die Bewegungen des Flugzeugs berücksichtigt. Dabei wird während eines ersten Sweeps der dynamische Druck, der ein Maß für die Relativgeschwindigkeit der Strömung gegenüber dem Flugzeug ist, konstant gehalten, und entweder wird die vorzugsweise verallgemeinerte Massenmatrix zunächst mit einem großen Skalierungsfaktor multipliziert, der dann sukzessive auf 1 reduziert wird, oder werden die vorzugsweise verallgemeinerte Steifigkeitsmatrix und die vorzugsweise verallgemeinerte Dämpfungsmatrix, soweit zumindest eine dieser beiden Matrizen von null abweichende Einträge insbesondere auf Ihrer Hauptdiagonalen aufweist, zunächst mit einem kleinen Skalierungsfaktor multipliziert, der dann sukzessive auf 1 erhöht wird. Mit Hilfe des Skalierungsfaktors werden die Rückkopplungen der aerodynamischen Kräfte auf die Bewegungen des Flugzeugs zunächst begrenzt, so dass der Einfluss der mindestens einen Struktureigenmode auf die mindestens eine dominante Strömungseigenmode zunächst nur klein ist. Durch das sukzessive Annähern des Skalierungsfaktors an 1 werden die Rückkopplungen zwischen den aerodynamischen Kräften und den Bewegungen des Flugzeugs an ihr tatsächliches Ausmaß herangeführt und dadurch deren Auswirkungen auf die mindestens eine Struktureigenmode und die mindestens eine dominante Strömungseigenmode an die tatsächlichen Verhältnisse angepasst. Während des ersten Sweeps wird zumindest die mindestens eine dominante Strömungseigenmode zumindest bezüglich der Entwicklung ihres Eigenwerts verfolgt. Die mindestens eine dominante Strömungseigenmode kann zusätzlich bezüglich etwaiger Entwicklung der Strömungseigenmode ihres Eigenwerts verfolgt werden, und die mindestens eine Struktureigenmode kann genauso wie die mindestens eine dominante Strömungseigenmode verfolgt werden.

Während eines zweiten Sweeps wird dann der dynamische Druck sukzessive erhöht, während der Skalierungsfaktor gleich 1 bleibt, um die Auswirkungen einer höheren Relativgeschwindigkeit der Strömung gegenüber dem Flugzeug zu beobachten. Dabei werden die mindestens eine Struktureigenmode und die mindestens eine dominante Strömungseigenmode zumindest hinsichtlich ihrer Eigenwerte verfolgt. Bei dieser Verfolgung wird ein Flatteronset dadurch erkannt, dass ein Realteil eines Eigenwerts der mindestens einen Struktureigenmode positiv wird. Ein Buffetonset wird dadurch erkannt, dass ein Realteil eines Eigenwerts der mindestens einen dominanten Strömungseigenmode positiv wird. Bei dem zweiten Sweep kann statt des dynamischen Drucks originär eine andere physikalische Größe sukzessive verändert werden, mit der der dynamische Druck in der Strömung sukzessive ansteigt.

Bei dem erfindungsgemäßen Verfahren werden alle berücksichtigten Eigenmoden mit ihren Eigenwerten und deren Entwicklungen im transsonischen Bereich auf einmal bestimmt. Es bedarf hierfür keiner Schätzungen, insbesondere keiner Schätzung des Buffetonsets.

Die Eigenwerte der mindestens einen Struktureigenmode und der mindestens einen dominanten Strömungseigenmode können auf einfache Weise mit Hilfe eines linearen Eigenwertlösers als Eigenwert des aeroelastischen Modells berechnet werden. Konkret können dafür die effizienten Linear Frequency Domain (LFD)-Solver CFD Code Strategy TAU und CODA der Anmelderin verwendet werden. Die Verwendung eines linearen Eigenwertlösers setzt jedoch eine Zustandsraumrealisierung des aerodynamischen Modells, aus dem die aerodynamischen Kräfte auf das Flugzeug als verallgemeinerte aerodynamische Kräfte (Generalized Aerodynamic Forces = GAF) im Zustandsraum bestimmbar sind.

Bei dem erfindungsgemäßen Verfahren ist eine Zustandsraumrealisierung durchzuführen, bei der Eigenwerte, die die aerodynamischen Kräfte darstellen, einen Imaginärteil ungleich null haben dürfen. Bei der dominanten Strömungseigenmode im transsonischen Bereich entspricht dieser Imaginärteil einer Buffetfrequenz. Weiterhin muss eine resultierende rationale aerodynamische Übertragungsfunktion bei der Zustandsraumrealisierung einen nicht-proper Term aufweisen, der die Wirkung der Zeitableitung von Bewegungen des Flugzeugs auf die aerodynamischen Kräfte beschreibt.

Nach der Zustandsraumrealisierung kann die mindestens eine dominante Strömungseigenmode bestimmt werden, in dem Residuen und Pole ausgewertet werden, die aus Zustandsraummatrizen gewonnen werden. Als besonders vorteilhaft hat es sich bei der Durchführung des erfindungsgemäßen Verfahrens erwiesen, wenn die mindestens eine dominante Strömungseigenmode mit Hilfe einer partiellen Bruchentwicklung einer aerodynamischen Übertragungsfunktion bestimmt wird, wobei aerodynamische Terme auf der Grundlage von Loewner-Matrizen und verschobenen Loewner-Matrizen dargestellt werden. Dieses Vorgehen entspricht der grundsätzlich bekannten p-L Methode. Zusätzlich kann eine Residualisierung der hohen Frequenzen eingeführt werden, wie aus D. Quero, P. Vuillemin und C. Poussot-Vassal, "A generalized state-space aeroservoelastic model based on tangential interpolation," Aerospace 6 (1), 9. doi: 10.3390/aerospace6010009, 2019 grundsätzlich bekannt ist.

Bei dem erfindungsgemäßen Verfahren ist es vorteilhaft, aber nicht zwingend, während des ersten Sweeps zum Verfolgen zumindest der mindestens einen dominanten Strömungseigenmode eine Fortsetzungsmethode anzuwenden, die Informationen über aeroelastische Sensitivitäten in Bezug auf den Skalierungsfaktor verwendet. Eine solche Fortsetzungsmethode nutzt die bisherige Veränderung der jeweiligen Eigenmode und/oder ihres Eigenwerts in Abhängigkeit von dem Skalierungsfaktor aus, um für den aktuellen Skalierungsfaktor einen Erwartungswert des Eigenwerts zu bestimmen. So kann ein mit Hilfe eines Eigenwertlösers bestimmter Eigenwert des aerodynamischen Modells mit hoher Treffsicherheit einer bestimmten Eigenmode zugeordnet werden, weil er dem zugehörigen Erwartungswert am nächsten kommt. Die Nutzung der Informationen über aeroelastische Sensitivitäten in Bezug auf den Skalierungsfaktor macht die Verfolgung zumindest der mindestens einen dominanten Strömungseigenmode robuster.

Der Wert des dynamischen Drucks, der während des ersten Sweeps konstant gehalten wird und der als Anfangswert für den dynamischen Druck während des zweiten Sweeps verwendet wird, ist auf einen sinnvollen Startpunkt des zweiten Sweeps abzustimmen. Dieser Wert des dynamischen Drucks sollte daher unterhalb des transsonischen Bereichs der Strömung liegen. Ein kleiner Wert des dynamischen Drucks während des ersten Sweeps erweist sich als günstig, und er kann konkret maximal $1 \times 10^{-1}$, vorzugsweise $1 \times 10^{-2}$ Pa und noch mehr bevorzugt $1 \times 10^{-3}$ Pa betragen. Es ist jedoch nicht weiter vorteilhaft, einen sehr kleinen Wert des dynamischen Drucks während des ersten Sweeps von weniger als $1 \times 10^{-4}$ oder gar von weniger als $1 \times 10^{-5}$ Pa zu verwenden.

Der große Skalierungsfaktor zu Beginn des ersten Sweeps kann mindestens $1 \times 10^4$, vorzugsweise mindestens $1 \times 10^5$ und noch mehr bevorzugt mindestens $1 \times 10^6$ betragen, während der kleine Skalierungsfaktor zu Beginn des ersten Sweeps höchstens $1 \times 10^{-4}$, vorzugsweise $1 \times 10^{-5}$ und noch mehr bevorzugt $1 \times 10^{-6}$ betragen kann.

Weiterhin ist es bevorzugt, wenn der Skalierungsfaktor in dem ersten Sweep in kleiner werdenden Schritten an eins herangeführt wird, und zwar in stark kleiner werdenden Schritten, wobei die Weite der Schritte um mehr als 99,9 % und vorzugsweise um mehr als 99,99 % oder noch stärker abnimmt.

Während des zweiten Sweeps ist es zwar nicht erforderlich, aber bevorzugt, eine Fortsetzungsmethode zum Verfolgen der mindestens einen Struktureigenmode und der mindestens einen dominanten Strömungseigenmode anzuwenden, die Informationen über aeroelastische Sensitivitäten in Bezug auf den dynamischen Druck berücksichtigt. Hier nutzt die Fortsetzungsmethode die bisherige Veränderung der jeweiligen Eigenmode und/oder ihres Eigenwerts in Abhängigkeit von dem dynamischen Druck aus, um für den aktuellen dynamischen Druck einen Erwartungswert des Eigenwerts zu bestimmen. Die Verwendung dieser Erwartungswerte macht die Fortsetzungsmethode insbesondere dann robuster, wenn das aeroelastische Modell mehrere Eigenmoden mit dicht beieinander liegenden Eigenwerten hat.

In dem zweiten Sweep kann der dynamische Druck in Druckschritten zwischen 0,1 und 0,001 Pa erhöht werden. Vorzugsweise weisen die Druckschritte eine Größenordnung von 0,01 Pa auf. Dabei kann eine Weite der Druckschritte während des zweiten Sweeps gleich bleiben oder aber, beispielsweise dann, wenn im transsonischen Bereich starke aeroelastische Sensitivitäten in Bezug auf den dynamischen Druck auftreten, reduziert werden.

Das erfindungsgemäße Verfahren wird auf ein Flugzeug angewandt, das sich in einer Strömung bewegt, und der Flatteronset und der Buffetonset werden vorhergesagt, um eine Grenze einer Flugenveloppe des Flugzeugs zu höheren Machzahlen hin so festzulegen, dass die Flugenveloppe vorgegebene Abstände zu dem Flatteronset und dem Buffetonset einhält.

Dabei gelten unterschiedliche Bedingungen für die Begrenzung des zulässigen Betriebsbereichs des Flugzeugs durch das Auftreten von Flatter- oder Buffetphänomenen. Beide Phänomene müssen vermieden werden, und die Flugenveloppe wird erfindungsgemäß so festgelegt, dass sie Sicherheitsabstände zu dem vorhergesagten Flatteronset und dem vorhergesagten Buffetonset einhält.

Zu dem vorhergesagten Buffettonset ist wie zu jedem in Flugversuchen erfassten Buffetonset gemäß https://www.faa.gov/documentLibrary/media/Advisory_Circular/AC_25-7D.pdf mindestens ein solcher Sicherheitsabstand einzuhalten, dass ein Manöver von 1,3 g innerhalb einer sogenannten Buffetgrenze durchgeführt werden kann, an der der Buffetonset auftritt. Konkret schreiben die sogenannten Joint Aviation Requirements vor, dass Verkehrsflugzeuge einen Abstand von mindestens 30 % zwischen der Reiseflugbetriebsbedingung und dem Buffetonset einhalten müssen. Dieser Sicherheitsabstand stellt eine gewisse Manövrierfähigkeit des Flugzeugs sicher. So kann das Flugzeug im Reiseflug ein Manöver mit 1,3 g durchführen, was einer Kurvenfahrt mit einem Neigungswinkel von 40 (Grad) entspricht. Dieser Sicherheitsabstand stellt nicht nur sicher, dass solche Manöver ohne Buffet ausgeführt werden können, sondern auch, dass Störungen durch Turbulenzen und Störungen aufgrund von Systemausfällen des Flugzeugs sicher gehandhabt werden können.

Für den vorhergesagten Flatteronset ist wie zu jedem in Flugversuchen erfassten Flatteronset der Sicherheitsabstand in Form von zusätzlichen Geschwindigkeiten definiert, die gemäß CS25.629 zu berücksichtigen sind, siehe https://www.easa.europa.eu/sites/default/files/dfu/CS-25 Amdt%203_19.09.07 Consolidated%20version.pdf. Konkret müssen Werte von 15 % über einer sogenannten Dive-Bedingung, die je nach Flughöhe durch eine Geschwindigkeit VD oder eine Machzahl MD definiert ist, so berücksichtigt werden, dass der Flatteronset auch bei diesen Werten noch nicht auftritt.

Das erfindungsgemäße Verfahren kann bereits bei der Entwicklung des Flugzeugs, das heißt vor seinen ersten Flugtests zur Anwendung kommen. Das erfindungsgemäße Verfahren kann aber auch beispielsweise dadurch, dass das Strukturmodell an den aktuellen Beladungszustand des Flugzeugs angepasst wird, dazu genutzt werden, die Flugenveloppe abhängig von dem Beladungszustand des Flugzeugs zu aktualisieren. Auf diese Weise kann beispielsweise ein großer Abstand zum Flatter- und Buffetonset bei jedem Beladungszustand des Flugzeugs eingehalten werden, aber ein übergroßer Abstand und damit eine übermäßige Einschränkung der Flugenveloppe vermieden werden, wie er mit einer vom Beladungszustand des Flugzeugs unabhängigen Flugenveloppe verbunden sein kann.

Ein erfindungsgemäßes Flugzeug weist eine Vorrichtung zur automatischen Durchführung des erfindungsgemäßen Verfahrens auf. Diese Vorrichtung kann so angeschlossen sein, dass sie eine in der Flugsteuerung des Flugzeugs hinterlegte Flugenveloppe automatisch aktualisiert. Weiterhin kann die Vorrichtung an Sensoren zur automatischen Erfassung des Beladungszustands des Flugzeugs angeschlossen sein.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

**KURZBESCHREIBUNG DER FIGUREN**

Im Folgenden wird die Erfindung anhand in den Figuren dargestellter bevorzugter Ausführungsbeispiele weiter erläutert und beschrieben.

**Fig. 1**    zeigt einen Tragflügel als Beispiels für einen Körper, der sich in einer Strömung bewegt,

**Fig. 2**    zeigt ein aerodynamisches Netz 11 in der Nähe des Tragflügels gemäß Fig. 1.

**Fig. 3**    zeigt die Kopplung eines Strukturmodels und eines aerodynamischen Models bei einem aeroelastischen Model des Körpers in der Strömung gemäß Fig. 1 und 2.

**Fig. 4**    illustriert die Abfolge von zwei Sweeps eines Skalierungsfaktors einerseits und des dynamischen Drucks andererseits bei dem erfindungsgemäßen Verfahren.

**Fig. 5**    zeigt die Entwicklung des komplexen Eigenwerts der dominantesten Strömungseigenmode mit abnehmendem Skalierungsfaktor bei dem ersten Sweep gemäß Fig. 4 bei einem ersten Anwendungsbeispiel.

**Fig. 6**    zeigt die Entwicklung der komplexen Eigenwerte zweier Struktureigenmoden und der dominantesten Strömungseigenmode mit steigendem Wert des dynamischen Drucks bei dem zweiten Sweep gemäß Fig. 4 bei demselben ersten Anwendungsbeispiel wie in Fig. 5.

**Fig. 7**    zeigt die Entwicklung des komplexen Eigenwerts der dominantesten Strömungseigenmode mit abnehmendem Skalierungsfaktor bei dem ersten Sweep gemäß Fig. 4 bei einem zweiten Anwendungsbeispiel.

**Fig. 8**    zeigt die Entwicklung der komplexen Eigenwerte zweier Struktureigenmoden und der dominantesten Strömungseigenmode mit steigendem Wert des dynamischen Drucks bei dem zweiten Sweep gemäß Fig. 4 bei demselben zweiten Anwendungsbeispiel wie in Fig. 7.

**Fig. 9**    zeigt die Grenzen einer Flugenveloppe eines typischen transsonischen Flugzeugs aufgetragen in einem Höhen-Geschwindigkeitsdiagramm; und

**Fig. 10**    ist ein Blockdiagramm zum Ablauf des erfindungsgemäßen Verfahrens.

**FIGURENBESCHREIBUNG**

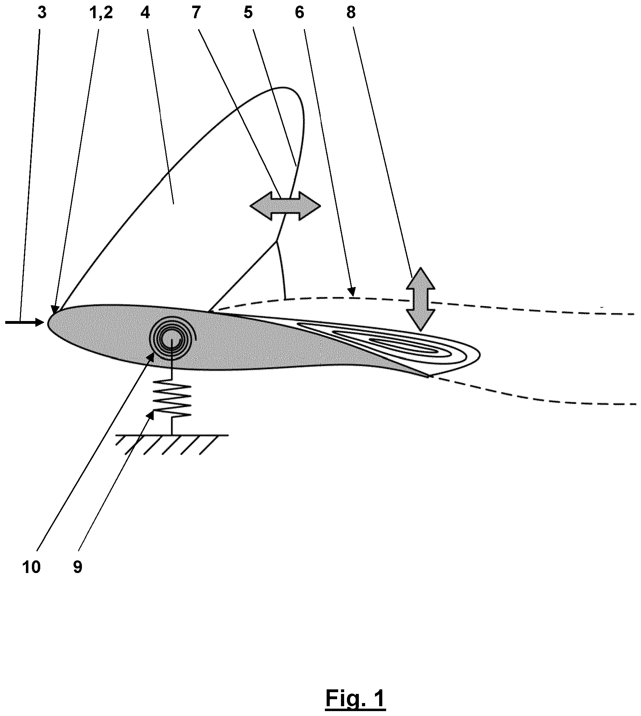

**Fig. 1** ist eine Skizze eines Tragflügels 1 mit idealisierten Strukturelementen als Beispiel für einen sich in einer Strömung 3 bewegenden Körper 2. Bei einer Machzahl der Strömung 3 von 0,73, einer Reynoldszahl von 3.000.000 und einem Anstellwinkel des Tragflügels 3 gegenüber der Strömung 3 von 4° bildet sich ein begrenztes Überschallströmungsgebiet 4 über der Oberseite des Tragflügels 1 aus, das mit einem Verdichtungsstoß 5 abschließt. Hinter dem Verdichtungsstoß 5 bildet sich eine abgelöste Scherschicht 6 der Strömung 3 aus. Doppelpfeile 7 und 8 deuten an, dass sich der Verdichtungsstoß 5 und die Scherschicht 6 beim Buffetting der Strömung 3 bewegen. Für den Tragflügel 1 sind zwei strukturelle Bewegungsfreiheitsgrade Hebung 9 und Neigung 10 durch die zugehörigen Steifigkeiten angedeutet.

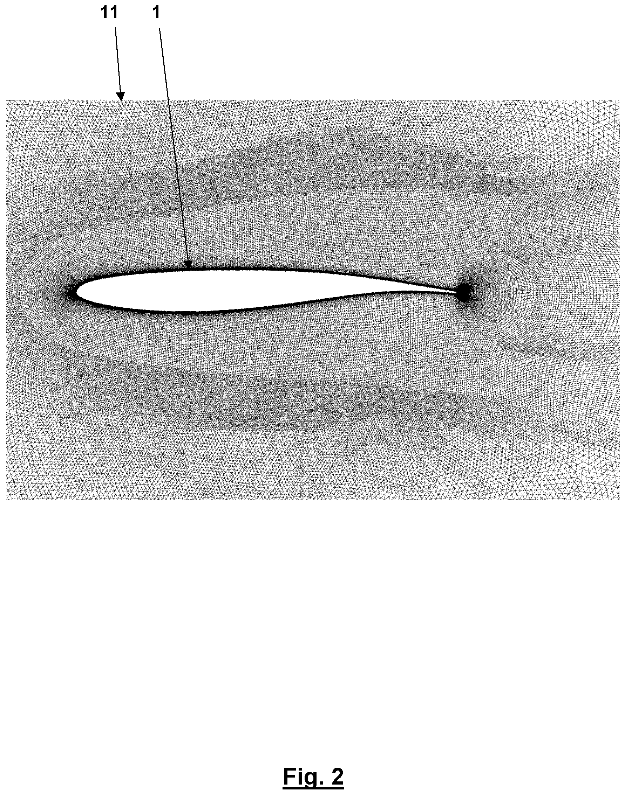

**Fig. 2** zeigt ein aerodynamisches Netz 11 in der Nähe des Tragflügels 1, das für das Beispiel gemäß Fig. 1 in J. Nitzsche, L. Ringer, C. Kaiser und H. Hennings, "Fuild-mode flutter in plane transonic flows," International Forum on Aeroelasticity and Structural Dynamics (IFASD), 2019, angegeben ist. Es wurde das Spalart-Allmaras (SA)-Turbulenzmodell verwendet, aber es kann auch jedes andere verfügbare Turbulenzmodell verwendet werden.

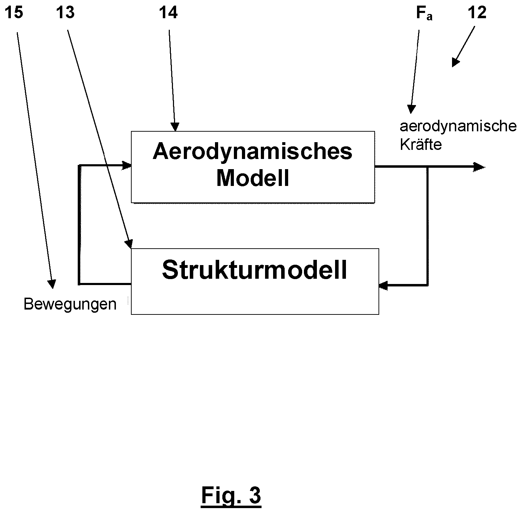

**Fig. 3** skizziert ein aeroelastisches Modell 12 des Körpers 2 in der Strömung 3, bei dem ein die elastischen Eigenschaften des Körpers 2 beschreibendes Strukturmodell 13 und ein die aerodynamischen Eigenschaften des Körpers 2 in der Strömung 3 beschreibendes aerodynamisches Modell 14 durch aerodynamische Kräfte $F_a$ auf den Körper 2 und Bewegungen 15 des Körpers in der Strömung 3 gekoppelt sind.
Das Strukturmodell 13 wird umfasst eine Massenmatrix M, eine Dämpfungsmatrix B und eine Steifigkeitsmatrix K, wobei abhängig von den strukturellen Eigenschaften des Körpers 2 auch Einträge auf den Hauptdiagonalen der beiden letzteren Matrizen B und K null sein können. Die Matrizen M, B und K sind quadratisch und haben eine Dimension, die der Anzahl der betrachteten Bewegungsfreiheitsgrade entspricht. Die Bewegungen des Körpers 2 werden durch einen Verschiebungsvektor x beschrieben, der Verschiebungen und Drehungen an verschiedenen Knotenpositionen des Körpers 2 angibt. Die Matrizen M, B und K und der Verschiebungsvektor x sind durch folgende Differentialgleichung mit den aerodynamischen Kräften $F_a$ verknüpft:

$$M \frac{d^2x(t)}{dt^2} + B \frac{dx(t)}{dt} + Kx(t) = F_a\left(t, x(t), \frac{dx(t)}{dt}\right)$$

Struktureigenmoden des Körpers 2 werden unter der Annahme bestimmt, dass keine aerodynamischen Kräfte auf den Körper 2 einwirken ($F_a = 0$). Häufig kann die Anzahl der Freiheitsgrade dann durch Anwendung einer Galerkin-Projektion mit einer Matrize reduziert werden, die einen abgeschnittenen Satz dieser Struktureigenmoden enthält. In diesem Fall werden die projizierten Größen als verallgemeinerte Massen-, Dämpfungs- und Steifigkeitsmatrizen und die aerodynamischen Kräfte $F_a$ als verallgemeinerte aerodynamische Kräfte (Generalized Aerodynamic Forces = GAF) bezeichnet.

In dem oben Anhand von Fig. 1 erläuterten Beispiel können die verallgemeinerte Massenmatrix $M_{hh}$ und die verallgemeinerte Steifigkeitsmatrix $K_{hh}$ bei Vernachlässigung der verallgemeinerten Dämpfungsmatrix $B_{hh}$ folgende Einträge aufweisen:

$$M_{hh} = \begin{bmatrix} 48.1056\ (kg) & 0 \\ 0 & 4.8106\ (kg * m^2) \end{bmatrix}$$

$$K_{hh} = \begin{bmatrix} 2.5322 * 10^5\ (N/m) & 0 \\ 0 & 0.4502 * 10^5\ (N * m) \end{bmatrix}$$

Die obige Differentialgleichung zeigt Kopplungen zwischen den durch den Verschiebungsvektor x beschriebenen Bewegungen 15 und den aerodynamischen Kräften $F_a$. Die Kopplungen hängen von den Bewegungen 15 des Körpers 2, d. h. dem Verschiebungsvektor x und seinen zeitlichen Ableitungen dx(t)/dt ab, während der Verschiebungsvektor x seinerseits von den auf das Strukturmodell 13 wirkenden aerodynamischen Kräften $F_a$ abhängt, wie in Fig. 3 dargestellt ist.

Die aerodynamischen Kräfte $F_a$(t,x(t),dx(t)/dt) hängen von der Zeit t und dem Verschiebungsvektor x und seinen zeitlichen Ableitungen dx(t)/dt ab. Zur Bestimmung der aerodynamischen Kräfte in dem aerodynamischen Modell 14 können verschiedene Theorien angewandt werden. In diesem Beispiel werden die instationären Reynolds-gemittelten Navier-Stokes-Gleichungen (URANS) mit dem Spalart-Allmaras (SA)-Turbulenzschlussmodell angewandt. Insbesondere wird dessen linearisierte Version um eine stationäre Referenz berücksichtigt. In diesem Fall sind die aerodynamischen Kräfte zusätzlich vom stationären Zustand und den nichtdimensionalen Mach- und Reynoldszahlen abhängig. Es können verschiedene Modelle mit unterschiedlichem Komplexitätsgrad betrachtet werden. Für die Bestimmung des Buffetonsets sind jedoch Strömungseigenmoden erforderlich, deren Eigenwerte einen Imaginärteil aufweisen. Somit sind kompressible Potentialströmungsverfahren nicht geeignet.

Um die Eigenwerte des aeroelastischen Modells 12 mit Hilfe eines linearen Eigenwertlöser berechnen zu können, wird eine Zustandsraumform des GAF-Terms benötigt. Zu diesem Zweck kann eine für das p-L-Verfahren vorgeschlagene Zustandsraumrealisierung durchgeführt werden. Der resultierende Zustandsraum kann so dargestellt werden, wie es das aus D. Quero, P. Vuillemin und C. Poussot-Vassal, "A generalized eigenvalue solution to the flutter stability problem with true damping: The p-L method", Journal of Fluids and Structures, 103266. doi: 10.1016/j.jfluidstructs.2021.103266, 2021, bekannte Loewner-Framework vorsieht. Zusätzlich kann eine Residualisierung hoher Frequenzen eingeführt werden, wie aus D. Quero, P. Vuillemin und C. Poussot-Vassal, "A generalized state-space aeroservoelastic model based on tangential interpolation", Aerospace 6 (1), 9. doi: 10.3390/aerospace6010009, 2019, bekannt ist. Es kann auch eine andere Zustandsraumrealisierung durchgeführt werden, die jedoch zwei Anforderungen erfüllen muss:

-   Die Eigenwerte, die die aerodynamischen Kräfte angeben, können einen Imaginärteil ungleich null aufweisen. Dies ist von grundlegender Bedeutung für die Strömungseigenmoden im transsonischen Bereich, da der Imaginärteil die Buffetfrequenz darstellt. Bei der Roger-Methode, siehe K. Roger, "Airplane math modeling methods for active control design", Proceedings of the 44th AGARD Structures and Material Panel (AGARD-CP-228), 1977, und der Karpel-Methode, siehe M. Karpel, "Design for active flutter suppression and gust alleviation using state-space aeroelastic modeling," Journal of Aircraft, Vol. 19, No. 3, 1982, werden für die Strömungseigenmoden nur Eigenwerte mit Realteil berücksichtigt, so dass diese Anforderung nicht erfüllt ist.

- Die aus der Zustandsraumrealisierung resultierende rationale aerodynamische Übertragungsfunktion muss einen nicht-proper Terms aufweisen, der die Wirkung der Zeitableitungen von Bewegungen des Körpers auf die aerodynamischen Kräfte beschreibt. Einige bekannte Methoden, die Eigenwerte des Fluidmodus mit Imaginärteil berücksichtigen, lassen den nicht-proper-Term nicht zu, wie z.B. der Eigensystem-Realisierungs-Algorithmus (ERA), siehe J. Juang und R. Pappa, "An eigensystem realization algorithm for modal parameter identification and model reduction", Journal of Guidance, Vol. 8, No. 5, 1985.

Nach der Zustandsraumrealisierung können die dominanten Strömungseigenmoden unter den Annahmen extrahiert werden, dass der Körper 2 Bewegungen gemäß der mindestens einen Struktureigenmode vollführt und dass die Strömung keinen Einfluss auf die Bewegungen des Körpers hat. In dem betrachteten zweidimensionalen Fall gemäß Fig. 1 reicht die dominanteste Strömungseigenmode für die Bestimmung des Buffet-Onsets typischerweise aus. Die Bestimmung kann mit Hilfe eines Kriteriums erfolgen, das aus einer Auswertung der Residuen und Pole bestehen kann, die aus den Zustandsraummatrizen gewonnen werden, wie von G. Sleijpen und J. Rommes, "Computing dominant poles of transfer functions", https://webspace.science.uu.nl/-sleij101/Temp/Sleijpen_Kyoto.pdf, zuletzt heruntergeladen am 21.12.2023, beschrieben wird.

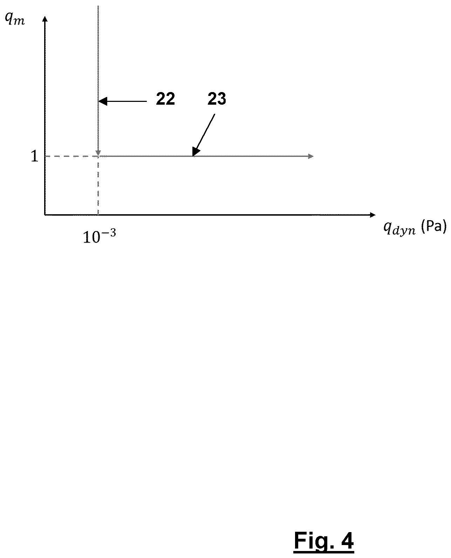

Nun werden zwei Sweeps 22 und 23 durchgeführt, wie in **Fig. 4** illustriert ist.

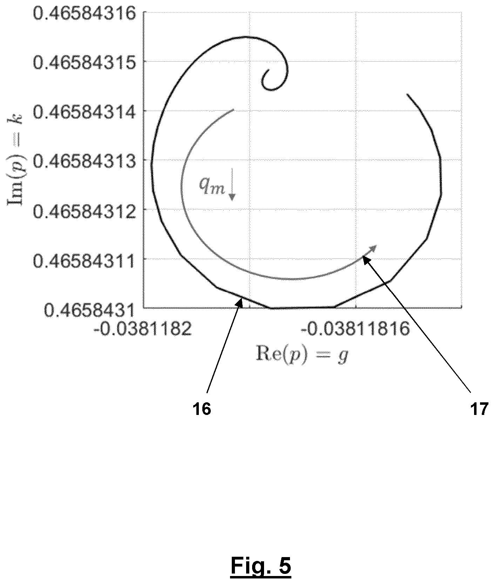

Bei dem ersten Sweep 22 wird ein Skalierungsfaktor $q_m$, mit dem die verallgemeinerte Massenmatrix $M_{hh}$ multipliziert wird, von einem Wert $q_m = 1 \times 10^6$ bis herunter auf $q_m = 1$ gesweept. Die Weite der Schritte $\Delta q_m$ zwischen zwei aufeinanderfolgenden Werten des Skalierungsfaktors $q_m$ kann zunächst höher angesetzt werden, z. B. mit $\Delta q_m = -1 \times 10^3$, und kann dann schrittweise verringert werden, z. B. bis auf $\Delta q_m = -0.05$. Eine geeignete Verfolgungsmethode kann angewendet werden, um die dominantesten Strömungseigenmoden bei abnehmendem Skalierungsfaktor $q_m$ zu verfolgen. Die Berücksichtigung der aeroelastischen Sensitivitäten in Bezug auf den Skalierungsfaktor $q_m$ kann zu diesem Zweck nützlich sein, ist aber nicht erforderlich. Während der erste Sweep 22 durchgeführt wird, wird der dynamische Druck auf den für den zweiten Sweep 23 gewünschten Anfangswert gesetzt, in diesem Beispiel auf $q_{dyn} = 1 \times 10^{-3}$ Pa. Für dieses Beispiel zeigt **Fig. 5** die Entwicklung des komplexen Eigenwerts 16 der dominantesten Strömungseigenmode, wenn der Skalierungsfaktor $q_m$ verkleinert wird, wie durch einen Pfeil 17 angedeutet ist.

Im zweiten Sweep 23 wird ausgehend vom Endwert des Skalierungsfaktor $q_m$ im ersten Sweep 22, d. h. $q_m = 1$, der dynamische Druck von $q_{dyn} = 1 \times 10^{-3}$ Pa erhöht, um die Entwicklung des Stabilitätsverhaltens unter Berücksichtigung der Struktureigenmoden und Strömungseigenmoden zu erhalten. Dabei wurde eine feste Druckschrittweite $\Delta q_{dyn} = 0,01$ Pa eingestellt. Die Druckschrittweite $\Delta q_{dyn}$ kann aber auch variiert werden, beispielsweise manuell oder automatisch anhand eines Prädiktor-Korrektor-Schemas. Während des Sweeps 23 werden die Struktureigenmoden und die Strömungseigenmoden verfolgt. Dabei kann die Berücksichtigung der aeroelastischen Sensitivitäten in Bezug auf den dynamischen Druck $q_{dyn}$ nützlich sein, siehe D. Quero, P. Vuillemin und C. Poussot-Vassal, "Improved mode tracking for the p-L flutter solution method based on aeroelastic derivatives," in IFASD, Madrid, Spanien, 2022, ist aber nicht erforderlich.

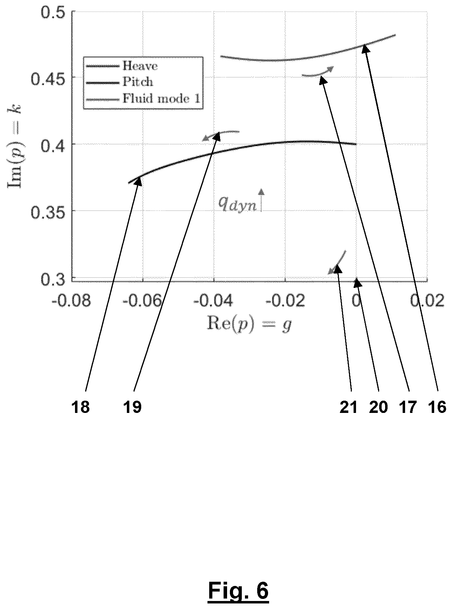

**Fig. 6** zeigt die Entwicklung der Eigenwerte 16, 18 und 20 der dominantesten Strömungseigenmode "Fluid mode 1" und der beiden Struktureigenmoden "Pitch" (Neigung 10) und "Heave" (Hebung 9) in der komplexen Ebene, wobei Pfeile 17, 19 und 21 in Richtung des zunehmenden dynamischen Drucks $q_{dyn}$ zeigen. Beim Wert $q_{dyn} = 1930,8$ Pa kreuzt der Realteil des Eigenwerts 16 der dominantesten Strömungseigenmode die imaginäre Achse, was auf einen Buffetonset hinweist.

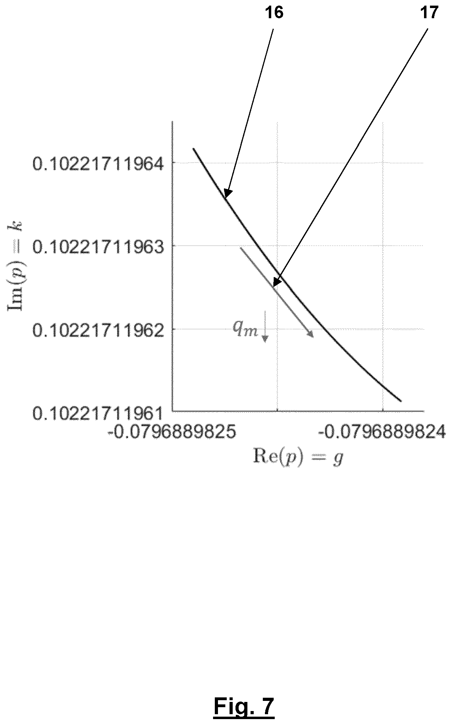

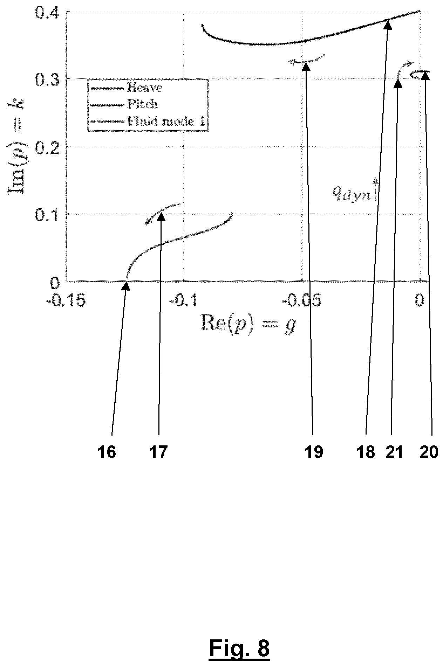

Für ein zweites Anwendungsbeispiel, das sich von dem bisherigen durch einen Anstellwinkel des Tragflügels 1 von 0° unterscheidet zeigt **Fig. 7** das Ergebnis des Sweeps 23 und **Fig. 8** das Ergebnis des Sweeps 22, wobei eine Instabilität durch einen Eigenwert 20 der Struktureigenmode "Heave" (Hebung 9)" verursacht wird, der die imaginäre Achse mit ansteigendem dynamischem Druck beim Wert $q_{dyn} = 7102.8$ Pa kreuzt. Dies weist auf einen Flatteronset hin. Somit ist derselbe Eigenwertlöser in der Lage, beide Phänomene, nämlich den Flatter- und den Buffetonset, vorherzusagen.

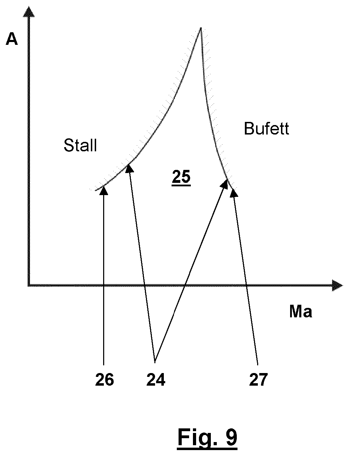

Bei dem erfindungsgemäßen Verfahren ist der sich in der Strömung bewegende Körper 2 ein Flugzeug. **Fig. 9** zeigt schematisch eine Flugenveloppe 24 eines transsonischen Flugzeugs aufgetragen in einem Höhen-Geschwindigkeitsdiagramm. Die Geschwindigkeit ist als Machzahl $M_A$, aufgetragen, die Höhe als Flughöhe A. Die Flugenveloppe 24 begrenzt einen zulässigen Betriebsbereich 25 des Flugzeugs. Zusammengesetzt ist die Flugenveloppe hier durch eine Überziehgrenze 26 oder stall boundary, bei deren Überqueren zu kleineren Fluggeschwindigkeiten hin eine Instabilität wegen eines zu großen Anstellwinkels oder Stalls auftritt. Eine Grenze 27 zu höheren Fluggeschwindigkeiten hin wird auch als Schüttelgrenze bezeichnet. Bei ihrem Überqueren kann das Phänomen Buffet auftreten, wenn das Flugzeug ein Manöver von 1,3 g fliegt. Das Einsetzen des Buffets, das heißt der Buffetonset, werden bei dem erfindungsgemäßen Verfahren vorhergesagt, um auf dieser Basis die Flugenveloppe 24 so festzulegen, dass sie einen ausreichenden Abstand, das heißt einen Sicherheitsabstand zu dem Buffetonset einhält.

Ebenso wird bei dem erfindungsgemäßen Verfahren das Einsetzen des Flatterns, das heißt der Flatteronset, vorhergesagt, um auf dieser Basis die Flugenveloppe so festzulegen, dass sie einen ausreichenden Abstand, das heißt einen Sicherheitsabstand zu dem Flatteronset einhält. Konkret kann der Sicherheitsabstand so konzipiert sein, dass der vorhergesagte Flatteronset bei Werten von 15 % über einer Dive-Bedingung, die je nach Flughöhe durch eine Geschwindigkeit $V_D$ oder eine Machzahl $M_D$ definiert ist, noch nicht auftritt.

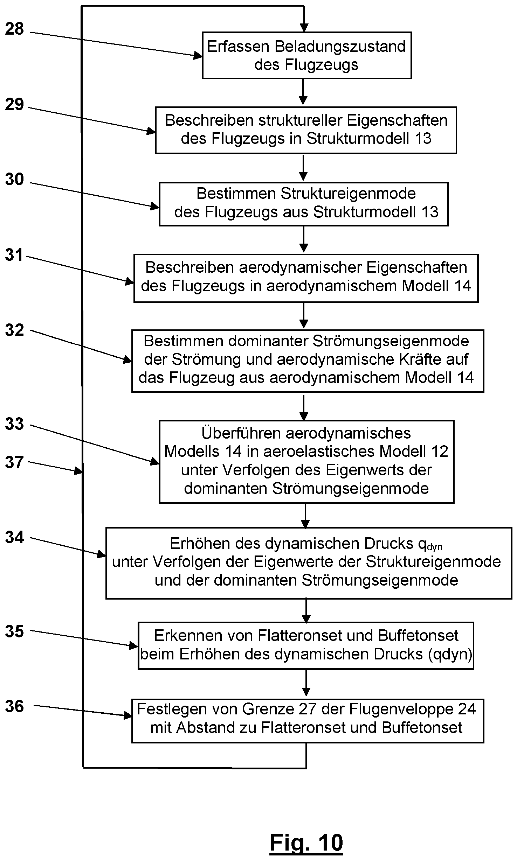

Das Blockdiagramm gemäß **Fig. 10** gibt eine graphische Übersicht über die Schritte des erfindungsgemäßen Verfahrens. In einem Schritt 28 wird ein Beladungszustand des Flugzeugs mit zur automatischen Erfassung des Beladungszustands geeigneten Sensoren erfasst. Unter Berücksichtigung des Beladungszustands werden in einem Schritt 29 die strukturellen Eigenschaften des Flugzeugs in dem Strukturmodell 13 beschrieben, das die Massenmatrix M, die verallgemeinerte Steifigkeitsmatrix K und die Dämpfungsmatrix B umfasst. In einem Schritt 30 wird mindestens eine Struktureigenmode des Flugzeugs aus dem Strukturmodell 13 bestimmt, und zwar unter der Annahme, dass keine aerodynamischen Kräfte $F_a$ auf das Flugzeug einwirken. In einem Schritt 31 werden die aerodynamischen Eigenschaften des Flugzeugs in der Strömung in dem aerodynamischen Modell 14 unter den anfänglichen Annahmen beschrieben, dass das Flugzeug Bewegungen gemäß der mindestens einen Struktureigenmode vollführt und die Strömung keinen Einfluss auf diese Bewegungen des Flugzeugs hat. In einem Schritt 32 werden mindestens eine dominante Strömungseigenmode der Strömung und aerodynamische Kräfte auf das Flugzeug aus dem aerodynamischen Modell 14 bestimmt. In einem Schritt 33 wird das aerodynamische Modell 14 durch Kopplung des Strukturmodells 13 in das aeroelastische Modell 12 überführt. Dabei wird während des ersten Sweeps 22 unter konstant Halten des dynamischen Drucks $q_{dyn}$ die Massematrix M zunächst mit einem großen Skalierungsfaktor $q_m$ multipliziert, der dann sukzessive auf 1 reduziert wird. Alternativ werden die Steifigkeitsmatrix K und die Dämpfungsmatrix B zunächst mit einem kleinen Skalierungsfaktor multipliziert, der dann sukzessive auf 1 erhöht wird. Während des ersten Sweeps 22 wird die mindestens eine dominante Strömungseigenmode hinsichtlich ihres Eigenwerts verfolgt. In einem Schritt 35 wird bei dem aeroelastischen Modell 12 während eines zweiten Sweeps 23 der dynamische Druck $q_{dyn}$ sukzessive erhöht. Dabei bleibt der Skalierungsfaktor $q_m$ gleich 1. Während des zweiten Sweeps 23 werden die mindestens eine Struktureigenmode und die mindestens eine dominante Strömungseigenmode hinsichtlich ihrer Eigenwerte verfolgt. Bei dieser Verfolgung wird ein Flatteronset dadurch erkannt, dass ein Realteil des Eigenwerts der mindestens einen Struktureigenmode positiv wird, und ein Buffetonset wird dadurch erkannt, dass ein Realteil des Eigenwerts der mindestens dominanten Strömungseigenmode positiv wird. In einem Schritt 36 wird dann basierend auf dem erkannten Flatteronset und dem erkannten Buffetonset die Grenze 27 der Flugenveloppe 24 mit Sicherheitsabstand zu dem Flatteronset und Buffetonset festgelegt, und das Flugzeug wird dann ausschließlich innerhalb dieser Flugenveloppe 24 geflogen. Eine Schleife 37 deutet an, dass die Schritte 28 bis 26 wiederholt werden, wann immer Hinweise darauf vorliegen, dass sich der Beladungszustand des Flugzeugs geändert hat oder geändert haben könnte. Dies kann beispielsweise durch Verbrauch von Treibstoff, den das Flugzeug mit sich führt, auch während des Flugs des Flugzeugs der Fall sein.

## <u>BEZUGSZEICHENLISTE</u>

| | |
|---|---|
| 1 | Tragflügel |
| 2 | Körper |
| 3 | Strömung |
| 4 | Überschallströmungsgebiet |
| 5 | Verdichtungsstoß |
| 6 | Scherschicht |
| 7 | Doppelpfeil |
| 8 | Doppelpfeil |
| 9 | Hebung |
| 10 | Neigung |
| 11 | Aerodynamisches Netz |
| 12 | Aeroelastisches Modell |
| 13 | Strukturmodell |
| 14 | Aerodynamisches Modell |
| 15 | Bewegungen |
| 16 | Eigenwert der dominantesten Strömungseigenmode |
| 17 | Pfeil |
| 18 | Eigenwert der Struktureigenmode "Pitch" |
| 19 | Pfeil |
| 20 | Eigenwert der Struktureigenmode "Heave" |
| 21 | Pfeil |

| 22 | Sweep |
|---|---|
| 23 | Sweep |
| 24 | Flugenveloppe |
| 25 | zulässiger Betriebsbereich |
| 26 | Überziehgrenze |
| 27 | Grenze zu höheren Machzahlen |
| 28 | Schritt |
| 29 | Schritt |
| 30 | Schritt |
| 31 | Schritt |
| 32 | Schritt |
| 33 | Schritt |
| 34 | Schritt |
| 35 | Schritt |
| 36 | Schritt |
| 37 | Schleife |
| M | Massenmatrix |
| $M_{hh}$ | Verallgemeinerte Massenmatrix |
| K | Steifigkeitsmatrix |
| $K_{hh}$ | Verallgemeinerte Steifigkeitsmatrix |
| B | Dämpfungsmatrix |
| $B_{hh}$ | Verallgemeinerte Dämpfungsmatrix |
| x | Verschiebungsvektor |
| $F_a$ | Aerodynamische Kraft |
| $F_{ahh}$ | Verallgemeinerte aerodynamische Kraft |
| $q_m$ | Skalierungsfaktor |
| $\Delta q_m$ | Schrittweite |
| $q_{dyn}$ | Dynamischer Druck |
| $\Delta q_{dyn}$ | Druckschritt |
| Ma | Machzahl |
| A | Flughöhe |

**Patentansprüche**

1.  Verfahren zum Festlegen einer Flugenveloppe (24) eines Flugzeugs unter Vorhersage von Flatter- und Buffetonset bei dem Flugzeug, das sich in einer Strömung (3) bewegt,

    - wobei strukturelle Eigenschaften des Flugzeugs in einem Strukturmodell (13) beschrieben werden, das eine Massenmatrix (M), eine verallgemeinerte Steifigkeitsmatrix (K) und eine Dämpfungsmatrix (B) umfasst,
    - wobei mindestens eine Struktureigenmode des Flugzeugs aus dem Strukturmodell (13) unter der Annahme bestimmt wird, dass keine aerodynamischen Kräfte ($F_a$) auf das Flugzeug einwirken,
    - wobei aerodynamische Eigenschaften des Flugzeugs in der Strömung (3) in einem aerodynamischen Modell (14) unter den anfänglichen Annahmen beschrieben werden, dass das Flugzeug Bewegungen (15) gemäß der mindestens einen Struktureigenmode vollführt und dass die Strömung (3) keinen Einfluss auf die Bewegungen (15) des Flugzeugs hat,
    - wobei mindestens eine dominante Strömungseigenmode der Strömung (3) und aerodynamische Kräfte auf das Flugzeug aus dem aerodynamischen Modell (14) unter den anfänglichen Annahmen bestimmt werden,
    - wobei das aerodynamische Modell durch Kopplung des Strukturmodells (13) in ein aeroelastisches Modell (12) überführt wird, wobei während eines ersten Sweeps (22) unter konstant Halten des dynamischen Drucks ($q_{dyn}$)
    - entweder die Massenmatrix (M) zunächst mit einem großen Skalierungsfaktor ($q_m$) multipliziert wird, der dann sukzessive auf 1 reduziert wird,
    - oder die Steifigkeitsmatrix (K) und die Dämpfungsmatrix (B) zunächst mit einem kleinen Skalierungsfaktor multipliziert werden, der dann sukzessive auf 1 erhöht wird,
    wobei zumindest die mindestens eine dominante Strömungseigenmode zumindest hinsichtlich ihres Eigenwerts (16) verfolgt wird,
    - wobei anschließend bei dem aeroelastischen Modell (12) während eines zweiten Sweeps (23) der dynamische Druck ($q_{dyn}$) sukzessive erhöht wird, während der Skalierungsfaktor ($q_m$) gleich 1 bleibt, wobei die mindestens eine Struktureigenmode und die mindestens eine dominante Strömungseigenmode zumindest hinsichtlich ihrer Eigenwerte (16, 18, 20) verfolgt werden,
- wobei während des zweiten Sweeps (23) ein Flatteronset dadurch erkannt wird, dass ein Realteil eines Eigenwerts der mindestens einen Struktureigenmode positiv wird, und ein Buffetonset dadurch erkannt wird, dass ein Realteil eines Eigenwerts der mindestens einen dominanten Strömungseigenmode positiv wird, und
- eine Grenze der Flugenveloppe (24) des Flugzeugs zu höheren Machzahlen hin so festgelegt wird, dass die Flugenveloppe (24) einen Abstand zu dem erkannten Flatteronset und dem erkannten Buffetonset einhält.

2. Verfahren nach Anspruch 1,

- **wobei** die Grenze der Flugenveloppe des Flugzeugs zu höheren Machzahlen hin so festgelegt wird, dass die Flugenveloppe einen solchen Abstand zu dem vorhergesagten Flatteronset einhält, dass der vorhergesagte Flatteronset bei Werten von 15 % über einer Dive-Bedingung noch nicht auftritt; und/oder
- **wobei** die Grenze der Flugenveloppe (24) des Flugzeugs zu höheren Machzahlen hin so festgelegt wird, dass die Flugenveloppe (24) einen solchen Abstand zu dem vorhergesagten Buffetonset einhält, dass der vorhergesagte Buffetonset noch nicht auftritt, wenn das Flugzeug ein Manöver von 1,3 g fliegt.

3. Verfahren nach einem der vorhergehenden Ansprüche, **wobei** die Eigenwerte der mindestens einen Struktureigenmode und der mindestens einen dominanten Strömungseigenmode mit Hilfe eines linearen Eigenwertlösers als Eigenwert des aeroelastischen Modells berechnet werden.

4. Verfahren nach einem der vorhergehenden Ansprüche, **wobei** die aerodynamischen Kräfte auf das Flugzeug aus dem aerodynamischen Modell als verallgemeinerte aerodynamische Kräfte (Generalized Aerodynamic Forces = GAF) im Zustandsraum bestimmt werden.

5. Verfahren nach Anspruch 4, **wobei** das aerodynamische Modell im Zustandsraum realisiert wird,

- wobei Eigenwerte, die die aerodynamischen Kräfte darstellen, einen Imaginärteil ungleich null haben können, der bei den Strömungseigenmoden im transsonischen Bereich einer Buffetfrequenz entspricht, und
- wobei eine resultierende rationale aerodynamische Übertragungsfunktion einen nicht-proper Term aufweist, der eine Wirkung einer zeitlichen Ableitung der Bewegungen des Flugzeugs auf die aerodynamischen Kräfte beschreibt.

6. Verfahren nach Anspruch 5,

- **wobei** die mindestens eine dominante Strömungseigenmode bestimmt wird, indem Residuen und Pole ausgewertet werden, die aus Zustandsraummatrizen gewonnen werden; und/oder
- **wobei** die mindestens eine dominante Strömungseigenmode mit Hilfe einer partiellen Bruchentwicklung einer aerodynamischen Übertragungsfunktion bestimmt wird, wobei aerodynamische Terme auf der Grundlage von Loewner-Matrizen und verschobenen Loewner-Matrizen dargestellt werden.

7. Verfahren nach einem der vorhergehenden Ansprüche, **wobei** während des ersten Sweeps (22) zum Verfolgen zumindest der mindestens einen dominanten Strömungseigenmode eine erste Fortsetzungsmethode angewandt wird, die Informationen über aeroelastische Sensitivitäten in Bezug auf den Skalierungsfaktor (qm) verwendet.

8. Verfahren nach einem der vorhergehenden Ansprüche,

- wobei ein Wert des dynamischen Drucks ($q_{dyn}$) während des ersten Sweeps (22), der als Anfangswert des zweiten Sweeps (23) verwendet wird, maximal $1 \times 10^{-1}$ Pa oder $1 \times 10^{-2}$ Pa oder $1 \times 10^{-3}$ Pa beträgt und/oder
- wobei der große Skalierungsfaktor zu Beginn des ersten Sweeps (22) mindestens $1 \times 10^{4}$ oder $1 \times 10^{5}$ oder $1 \times 10^{6}$ beträgt oder der kleine Skalierungsfaktor zu Beginn des ersten Sweeps (22) höchstens $1 \times 10^{-4}$ oder $1 \times 10^{-5}$ oder $1 \times 10^{-6}$ beträgt.

9. Verfahren nach einem der vorhergehenden Ansprüche, **wobei** in dem ersten Sweep (22) der Skalierungsfaktor in kleiner werdenden Schritten an 1 heran geführt wird, wobei eine Weite der Schritte optional um mehr als 99,9 % oder um mehr als 99,99 % abnimmt.

10. Verfahren nach einem der vorhergehenden Ansprüche, **wobei** während des zweiten Sweeps (23) zum Verfolgen der mindestens einen Struktureigenmode und der mindestens einen dominanten Strömungseigenmode eine zweite Fortsetzungsmethode angewandt wird, die Informationen über aeroelastische Sensitivitäten in Bezug auf den dynamischen Druck (qdyn) berücksichtigt.

11. Verfahren nach einem der vorhergehenden Ansprüche, **wobei** in dem zweiten Sweep (23) der dynamische Druck ($q_{dyn}$) in Druckschritten ($\Delta q_{dyn}$) zwischen 0,1 Pa und 0,001 Pa erhöht wird.

12. Verfahren nach einem der vorhergehenden Ansprüche, **wobei** das Flugzeug zu höheren Machzahlen hin maximal bis zu der Grenze der Flugenveloppe des Flugzeugs geflogen wird.

13. Verfahren nach einem der vorhergehenden Ansprüche,

- **wobei** die Flugenveloppe (24) abhängig von einem aktuellen Beladungszustand des Flugzeugs aktualisiert wird, indem der aktuelle Beladungszustand des Flugzeugs erfasst wird, das Strukturmodell (13) an den aktuellen Beladungszustand des Flugzeugs angepasst wird, der Flatteronset und der Buffetonset basierend auf dem angepassten Strukturmodell (13) neu vorhergesagt werden und die Grenze der Flugenveloppe (24) zu höheren Machzahlen hin erneut so festgelegt wird, dass die Flugenveloppe (24) einen Abstand zu dem neu erkannten Flatteronset und dem neu erkannten Buffetonset einhält;
- **wobei,** optional, die in einer Flugsteuerung des Flugzeugs hinterlegte Flugenveloppe (24) automatisch aktualisiert wird.

14. Flugzeug mit einer Vorrichtung zur automatischen Durchführung des Verfahrens nach einem der vorhergehenden Ansprüche, **wobei** die Vorrichtung

- eine Flugsteuerung, die ein Fliegen des Flugzeugs nur in den Grenzen seiner Flugenveloppe (24) zulässt, und/oder
- einen Autopilot, der das Flugzeug nur in den Grenzen seiner Flugenveloppe (24) fliegt, aufweist.

15. Flugzeug nach Anspruch 14, **wobei** die Vorrichtung an Sensoren zur automatischen Erfassung des Beladungszustands des Flugzeugs angeschlossen ist.

3    1,2    4    7    5    6    8

10    9

**Fig. 1**

**Fig. 2**

15    13         14                          $F_a$    12

Aerodynamisches
Modell

aerodynamische
Kräfte

Strukturmodell

Bewegungen

**Fig. 3**

**Fig. 4**

**Fig. 5**

**Fig. 6**

**Fig. 7**

**Fig. 8**

A

Stall

Bufett

<u>25</u>

Ma

**26**   **24**   **27**

<u>**Fig. 9**</u>

28 → Erfassen Beladungszustand
des Flugzeugs

29 → Beschreiben struktureller Eigenschaften
des Flugzeugs in Strukturmodell 13

30 → Bestimmen Struktureigenmode
des Flugzeugs aus Strukturmodell 13

31 → Beschreiben aerodynamischer Eigenschaften
des Flugzeugs in aerodynamischem Modell 14

32 → Bestimmen dominanter Strömungseigenmode
der Strömung und aerodynamische Kräfte auf
das Flugzeug aus aerodynamischem Modell 14

33 →
37 →
Überführen aerodynamisches
Modells 14 in aeroelastisches Modell 12
unter Verfolgen des Eigenwerts der
dominanten Strömungseigenmode

34 → Erhöhen des dynamischen Drucks $q_{dyn}$
unter Verfolgen der Eigenwerte der Struktureigenmode
und der dominanten Strömungseigenmode

35 → Erkennen von Flatteronset und Buffetonset
beim Erhöhen des dynamischen Drucks (qdyn)

36 → Festlegen von Grenze 27 der Flugenveloppe 24
mit Abstand zu Flatteronset und Buffetonset

**Fig. 10**

Europäisches
Patentamt

European
Patent Office

Office européen
des brevets

**EUROPÄISCHER RECHERCHENBERICHT**

Nummer der Anmeldung

EP 24 22 0079

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | HOUTMAN JELLE ET AL: "Global stability analysis of elastic aircraft in edge-of-the-envelope flow", JOURNAL OF FLUID MECHANICS., Bd. 967, 12. Juli 2023 (2023-07-12), XP093275772, GB ISSN: 0022-1120, DOI: 10.1017/jfm.2023.413 * Kap. 1, 2.1, 2.2, 4.2 Eq. 2.3 * | 1-13 | INV. G06F30/20 G05B17/02 <br><br> ADD. G06F111/10 G06F119/02 G06F119/14 |
| A | GAO CHUANQIANG ET AL: "Transonic aeroelasticity: A new perspective from the fluid mode", PROGRESS IN AEROSPACE SCIENCES, OXFORD, GB, Bd. 113, 9. Januar 2020 (2020-01-09), XP086084503, ISSN: 0376-0421, DOI: 10.1016/J.PAEROSCI.2019.100596 [gefunden am 2020-01-09] * Kap. 1, 4.1, 4.3 * | 1-15 | |
| A | RUMPFKEIL MARKUS P ET AL: "Multi-fidelity surrogate models for flutter database generation", COMPUTERS AND FLUIDS, PERGAMON PRESS, NEW YORK, NY, GB, Bd. 197, 12. November 2019 (2019-11-12), XP086035050, ISSN: 0045-7930, DOI: 10.1016/J.COMPFLUID.2019.104372 [gefunden am 2019-11-12] * Kap. 2.3.3 * | 1-15 | RECHERCHIERTE SACHGEBIETE (IPC) <br><br> G06F G05B |

Der vorliegende Recherchenbericht wurde für alle Patentansprüche erstellt

| Recherchenort | Abschlußdatum der Recherche | Prüfer |
|---|---|---|
| München | 12. Mai 2025 | Lampmann, Arne |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *Gemäß Flugenveloppe - Wikipedia*, 03 December 2022, https://de.wikipedia.org/wiki/Flugenveloppe, zuletzt
- **AUS HOUTMAN, J.** ; **TIMME, S.** Global stability analysis of elastic aircraft in edge-of-theenvelope flow. *Journal of Fluid Mechanics*, 2023, vol. 967, https://doi.org/1 0.101 7/jfm.2023.413
- **AUS J. NITZSCHE** ; **L. RINGER** ; **C. KAISER** ; **H. HENNINGS**. Fuild-mode flutter in plane transonic flows. *International Forum on Aeroelasticity and Structural Dynamics (IFASD)*, 2019
- **D. QUERO** ; **P. VUILLEMIN** ; **C. POUSSOT-VASSAL**. A generalized eigenvalue solution to the flutter stability problem with true damping: The p-L method. *Journal of Fluids and Structures*, 2021, 103266
- **D. QUERO** ; **P. VUILLEMIN** ; **C. POUSSOT-VASSAL**. Improved mode tracking for the p-L flutter solution method based on aeroelastic derivatives. *IFASD*, 2022
- **D. QUERO** ; **P. VUILLEMIN** ; **C. POUSSOT-VASSAL**. A generalized state-space aeroservoelastic model based on tangential interpolation. *Aerospace*, 2019, vol. 6 (1), 9
- **J. NITZSCHE** ; **L. RINGER** ; **C. KAISER** ; **H. HENNINGS**. Fuild-mode flutter in plane transonic flows. *International Forum on Aeroelasticity and Structural Dynamics (IFASD)*, 2019
- **K. ROGER**. Airplane math modeling methods for active control design. *Proceedings of the 44th AGARD Structures and Material Panel (AGARD-CP-228)*, 1977
- **M. KARPEL**. Design for active flutter suppression and gust alleviation using state-space aeroelastic modeling. *Journal of Aircraft*, 1982, vol. 19 (3)
- **J. JUANG** ; **R. PAPPA**. An eigensystem realization algorithm for modal parameter identification and model reduction. *Journal of Guidance*, 1985, vol. 8 (5)
- **G. SLEIJPEN** ; **J. ROMMES**. *Computing dominant poles of transfer functions*, 21 December 2023, https://webspace.science.uu.nl/-sleij101/Temp/Sleijpen_Kyoto.pdf